(19) **Europäisches Patentamt
European Patent Office
Office européen des brevets**

(11) **EP 3 675 413 B1**

(12) **EUROPEAN PATENT SPECIFICATION**

(45) Date of publication and mention
of the grant of the patent:
**01.12.2021 Bulletin 2021/48**

(51) Int Cl.:
*H04L 9/08* *(2006.01)*       *H04L 9/32* *(2006.01)*
*H04L 9/30* *(2006.01)*       *H04L 9/00* *(2006.01)*

(21) Application number: **19184786.2**

(22) Date of filing: **05.07.2019**

(54) **AN EFFICIENT THRESHOLD DISTRIBUTED ELLIPTIC CURVE KEY GENERATION AND SIGNATURE METHOD AND SYSTEM**

EFFIZIENTE SCHWELLENVERTEILTE ELLIPTISCHE KURVENSCHLÜSSELERZEUGUNG SOWIE SIGNATURVERFAHREN UND -SYSTEM

GÉNÉRATION EFFICACE DE CLÉ DE COURBE ELLIPTIQUE À SEUIL REPARTI ET PROCÉDÉ ET SYSTÈME DE SIGNATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2018 CN 201811610503**

(43) Date of publication of application:
**01.07.2020 Bulletin 2020/27**

(73) Proprietor: **Blue Helix
Beijing (CN)**

(72) Inventors:
• **LIN, Yuqi
Chaoyang District, Beijing Xiaguangli 18 (CN)**
• **WEN, Kai
Chaoyang District, Beijing Xiaguangli 18 (CN)**
• **JIANG, Kailiang
Chaoyang District, Beijing Xiaguangli 18 (CN)**
• **JU, Jianhua
Chaoyang District, Beijing Xiaguangli 18 (CN)**

(74) Representative: **MacDougall, Alan John Shaw et al
Mathys & Squire
The Shard
32 London Bridge Street
London SE1 9SG (GB)**

(56) References cited:
**WO-A1-2015/160839      CN-A- 106 850 198**

• **Steven Goldfeder ET AL: "Securing Bitcoin wallets via a new DSA/ECDSA threshold signature scheme", , 8 March 2015 (2015-03-08), XP55318844, Retrieved from the Internet: URL:https://www.cs.princeton.edu/~stevenag /threshold_sigs.pdf [retrieved on 2016-11-11]**
• **Yang-Yu Liu ET AL: "Threshold secret authentication based on ellipitic curve", Computer Engineering and Design, Vol. 26, No. 10, 1 October 2005 (2005-10-01), pages 2858-2859, XP55636168, DOI: 10.16208/j.issn1000-7024.2005.10.094 Retrieved from the Internet: URL:http://en.cnki.com.cn/Article_en/CJFDT otal-SJSJ200510093.htm [retrieved on 2019-10-28]**

**Description**

TECHNOLOGY FIELD

The present invention relates to the field of cryptography, and in particular to a distributed elliptic curve key generation and signature technique.

BACKGROUND TECHNOLOGY

Elliptic curve cryptography (ECC) is an approach to public-key cryptography based on the algebraic structure of elliptic curves over finite fields. ECC requires smaller keys compared to non-EC cryptography to provide equivalent security. Elliptic Curve Digital Signature Algorithm (ECDSA) offers a variant of the Digital Signature Algorithm (DSA) which uses elliptic curve cryptography. ECDSA is widely used in the blockchain field. Bitcoin, Ethereum and other mainstream digital currencies use this algorithm to sign and verify the legality of transactions.

Threshold Cryptosystem is a cryptographic technique based on secret sharing technology. The basic idea is to divide the key K into n shares (k1, k2,..., kn) according to a secret sharing protocol. Knowing X (T <= X <= N) ki values, k can be calculated; if less than T ki values are known, K cannot be calculated due to information shortage. This method is generally called ( T, N) threshold method. The two secret sharing protocols currently widely used are the Shamir Secret Sharing Protocol and the Asmuth Brom Secret Sharing Protocol, the former based on the Lagrangian interpolation formula and the latter based on the Chinese remainder theorem.

Homomorphic encryption is a form of encryption that allows computation on ciphertexts, generating an encrypted result which, when decrypted, matches the result of the operations as if they had been performed on the plaintext. From the perspective of abstract algebra, it maintains homomorphism. According to the type of operation, it is generally divided into additive homomorphism, multiplicative homomorphism, subtraction homomorphism, and division homomorphism. Simultaneously satisfying the additive homomorphism and the multiplicative homomorphism means algebraic homomorphism, that is full homomorphism. In the current encryption algorithm, the RSA algorithm is a multiplicative homomorphism, the Paillier algorithm is an additive homomorphism, and the Gentry algorithm is a full homomorphism.

Steven Goldfeder, et al: "Securing bitcoin wallets via a new DSA/ECDSA threshold signature scheme, 8 March 2015 describes a t-of-n threshold signature scheme compatible with ECDSA signatures (and hence compatible with Bitcoin). A *t*-out-of-*t* threshold protocol is constructed and a t-out-of-n protocol is derived via a combinatorial construction that involves $\binom{n}{t}$ sets of shares. There is illustrated a protocol where distributed wallets can be used to systematically eliminate single points of failure at every stage of the flow of bitcoins through a system, and for individuals, there is proposed a two-factor secure Bitcoin wallet.

INVENTION CONTENTS

In the currently known distributed elliptic curve key generation and signature technologies, there are generally problems such as not supporting a threshold scheme, low efficiency which cannot be used in a real scene.

The invention provides an efficient threshold distributed elliptic curve key generation and signature method and system which is similar to single node efficiency.

In accordance with a first aspect of the present invention, there is provided an efficient distributed elliptic curve key generation and signature method, which is characterized in that the method comprises the following steps:

S1, in the absence of a trusted center to participate, all n nodes generate their own key pair (ptki, puki), wherein ptki is a private key, and puki is a public key.

S2, each node processes its own public-private key pair according to a secret sharing protocol, and completes the conversion of a (n, n) threshold to a (t, n) threshold.

S3, after determining the t signature nodes, each node generates a (t, t) threshold private key according to a threshold logic, and completes the mapping of ptki to ptki',
wherein ptki' is the threshold private key, by means of a process comprising:

S31, all n nodes, according to the rules of the elliptic curve, each generate their own key pair, ptki, puki, wherein ptki is the private key, puki is the public key, and i is the node number;

S32, all n nodes broadcast their own public keys puki to other nodes, and after receiving the pukx broadcasted by other n-1 nodes, combine n pukx into a complete public key PUK according to the elliptic curve operation.

S33, all n nodes do the (t,n) threshold processing according to a selected secret sharing protocol, map ptki to n segments ptkij, and send ptkij to the corresponding node numbered j; and

S34, when a signature is performed, t available nodes recover ptki' using the received n ptkij according to the recovery method of the selected secret sharing protocol;

and

S4, according to the signature logic, each node uses ptki' to complete the communication and calculation in the signature protocol, and stores the relevant calculation results, and finally completes the overall signature.

Further, the secret sharing protocol may be a Shamir or Asmuth-Bloom protocol.
Further, the S4 may include:

S41, according to the distributed signature algorithm, all nodes adopt a unified homomorphic encryption algorithm HE, which each node generates a public-private key pair (HEptki, HEpuki), HEptiki as a private key, HEpuki as a public key, and i is a node number.

S42, all nodes use the unified secret transform function Fconv to convert the information that cannot be directly disclosed in the calculation process to publicly available information according to the calculation process of the elliptic curve signature algorithm.

S43, each node sends the result of S42 to the corresponding node, and receives information of other nodes;

S44, according to the flow of the elliptic curve signature algorithm, each node records the information in S43 that is not related to the signed object but is used in the final signature generation, and each node maintains a unified view number v;

S45, according to the requirements of the online business, S42-44 is repeatedly executed to complete the offline calculation process required for distributed signature;

S46, when the signature service is provided online, each node synchronizes the view information v, and the calculation result stored in the view is taken out. Each node starts another thread to executes S45 continuously to produce intermediate results needed in final signature.

S47, each node completes the calculation related to the signed object, and then completes the final signature calculation according to the intermediate result extracted in S46, generating a signature result sigi, i is the node number;

S48, each node transmits the sigi in S47 to the selected assembly node, and, after receiving the information transmitted by each node, the assembly node generates the final signature result SIG.

Further, the implementation of the Fconv function may depend on the homomorphic encryption algorithm used in the framework, which uses the public-private key pair in S41 to encrypt and decrypt the messages.
Further, depending on the distributed signature algorithm employed, each node in S42 may typically requires several rounds of computation and communication.
Further, in S43, if all the information has been converted and sent, the intermediate result may be stored in the view; if there is still information to be converted and transmitted, the Fconv function may continue to convert and transmit until all information processing is completed.
Further, the signature information in the S48 may be the final signature information which can be verified by the PUK in S32.
Further, the threshold distributed elliptic curve key generation and signature method could be applied to a digital asset wallet APP or a digital asset exchange wallet system for security enhancement and digital asset management; all parties whose interests are not related jointly manage digital assets, respectively Acting as the signature node in the scheme, each performs the signature process.
In accordance with a second aspect of the invention, there is provided an efficient threshold distributed elliptic curve key generation and signature system, which is characterized in that the system comprises the following modules:

A key generation module, configured and used to generate public-private key pairs (ptki, puki), ptki is the private key, and puki is the public key without the participation of a trusted center;

a conversion module, configured and used to process public-private key pairs according to the secret sharing protocol, and complete (n, n) threshold to (t, n) threshold conversion;

a mapping module, configured and used to generate a (t, t) threshold private key according to the threshold logic, and completes mapping of ptki to ptki'; wherein ptki' is the threshold private key, by means of a process comprising:

S31, all n nodes, according to the rules of the elliptic curve, each generate their own key pair, ptki, puki, wherein ptki is the private key, puki is the public key, and i is the node number;

S32, all n nodes broadcast their own public keys puki to other nodes, and after receiving the pukx broadcasted by other n-1 nodes, combine n pukx into a complete public key PUK according to the elliptic curve operation.

S33, all n nodes do the (t,n) threshold processing according to a selected secret sharing protocol, map ptki to n segments ptkij, and send ptkij to the corresponding node numbered j; and

S34, when a signature is performed, t available nodes recover ptki' using the received n ptkij according to the recovery method of the selected secret sharing protocol;
and

a signature module, configured and used to implement the communication and calculation according to the signature logic, and store the relevant result, and finally complete the final signature.

Further, the mapping module may include the following units:
The receiving unit, which may be used to receive the public keys and the private key shares sent by all other nodes.

The sending unit, which may be used to broadcast the public key to other nodes and send the private key shares to the corresponding nodes according to the secret sharing protocol.

The recovery unit, which may be used to generate the final public key according to the elliptic curve operation and generate the new private key according to the recovery method in the secret sharing protocol.

Further, the secret sharing protocol may be a Shamir or Asmuth-Bloom protocol.

Further, the signature module may further include the following two units:

The first unit runing thread 1, which may be used to generate homomorphic public-private key pair and use Fconv function to perform a secret conversion and send/receive the converted information to/from the corresponding nodes;

Further, if all the information has been converted and sent, the intermediate result may be stored in the view; if there is still information to be converted and transmitted, the Fconv function may continue to convert and transmit until all information processing is completed.

Further ,the implementation of the Fconv function may depend on the homomorphic encryption algorithm used in the framework, which uses the public-private key pair to encrypt and decrypt messages.

The second unit runing thread 2, which may be used to synchronize the view information and read the intermediate calculation result under the view information and complete the calculation related to the signature message and generate a local signature sigi and broadcast the signature to other nodes.

Further, the threshold distributed elliptic curve key generation and signature method could be applied to a digital asset wallet APP or a digital asset exchange wallet system for security enhancement and digital asset management; all parties whose interests are not related jointly manage digital assets, respectively acting as the signature node in the scheme, each performs the signature process.

The invention has advantages of no centralization, strong robust, high efficiency and low transaction fee. The details are as follows: 1) Public-private key pairs are generated respectively, and only the public keys are published. The entire process does not require a trusted center.2) Threshold logic is supported to ensure that the final signature can only be generated when most of nodes participate the process. The absence of few nodes does not lead to an overall flaw; 3) the key generation and signature are very efficient and the time consuming is similar to a single node process; 4) Based on the invention, the effect of multi-signature can be realized by the cost of a single signature transaction fee.

BRIEF DESCRIPTION OF THE FIGURES

The invention is more fully appreciated in connection with the following detailed description taken in conjunction with the accompanying drawings, in which:

FIG. 1 is a flow diagram of the general method of the invention;

FIG.2 is a diagram depicting an example of distributed key generation and signature for a (6, 10) threshold.

FIG.3 is a block diagram of the system;

FIG.4 is a block diagram of the mapping module;

DETAILED DESCRIPTION OF EXEMPLARY EMBODIMENTS

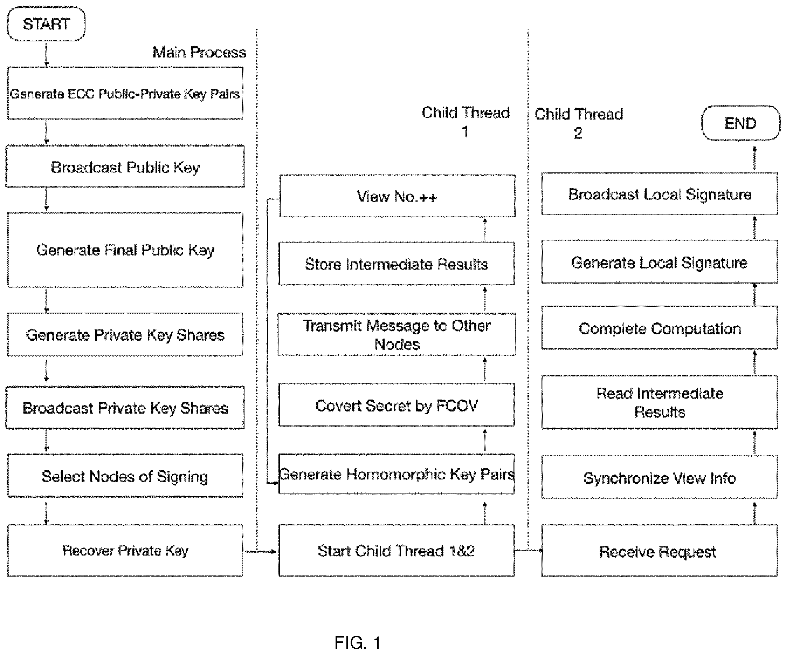

FIG. 1 is a diagram showing the flow of the threshold distributed elliptic curve key generation and signature method of the invention. The flow starts from where each node generates a public-private key pair of elliptic curves separately, then broadcasts the public key to other nodes. After receiving the public keys of other nodes, each node generates a unified public key according to the rules of the elliptic curve. Each node performs a fragmentation method of the secret sharing protocol on the private key, and sends the private key shares to the corresponding nodes.

When a signature requirement comes, t of n nodes selected recover the private key according to the recovery method of the secret sharing protocol respectively. Each of the t selected nodes starts child thread 1 and child thread 2. The child thread 1 is responsible for generating the public-private key pair of the homomorphic encryption, calling the FCONV function to complete the secret conversion, sending the conversion result to the corresponding node, and storing the intermediate calculation result under the current view information; the child thread 2 is responsible for processing the signature request, specifically including: synchronization view information, taking out the intermediate calculation result under the view, completing the calculation related to the signed object, generating local signature and broadcasting it to other nodes, and finally completing the final signature.

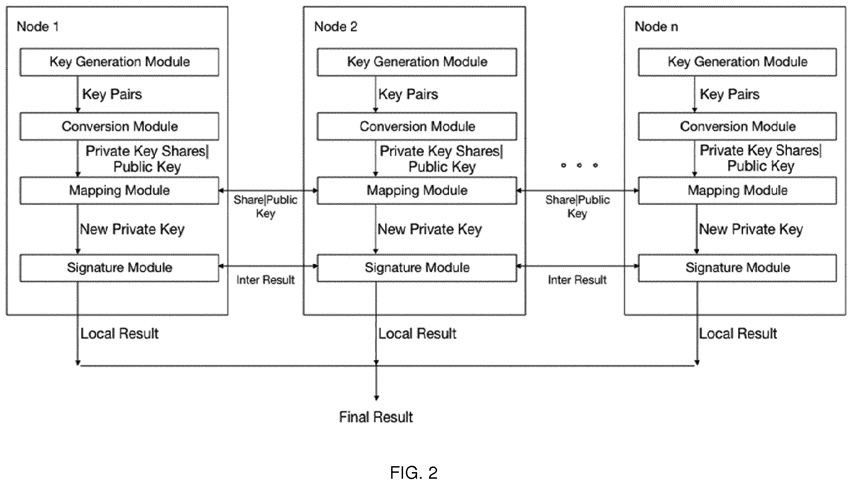

FIG 2 is a diagram depicting an example of distributed key generation and signature for a (6, 10) threshold. As shown in Fig.2, there are total 10 nodes and 6 nodes labelled from 1 to 6 are chosen to participate the signature process. Each of the 10 nodes generates a public-private key pair (ptki, pubi) separately, ptki is a private key, and pubi is a public key, i is the node label. Then, the public key is broadcast to the other nodes, and the private key is processed according to a common secret sharing protocol. Each private key is processed into 10 shares, and then each is distributed to the corresponding node. Next, each of the selected 6 nodes firstly recover the private key by the 10 shares (9 are received, 1 is saved by themselves) according to the secret sharing protocol. Then, according to the common Fconv conversion function, the secret information in the signature process is converted into information that can be sent to other nodes, and the converted information is transmitted and received. Finally, each node generates its own local signature based on the object being signed and broadcasts it to other nodes to assemble the final signature.

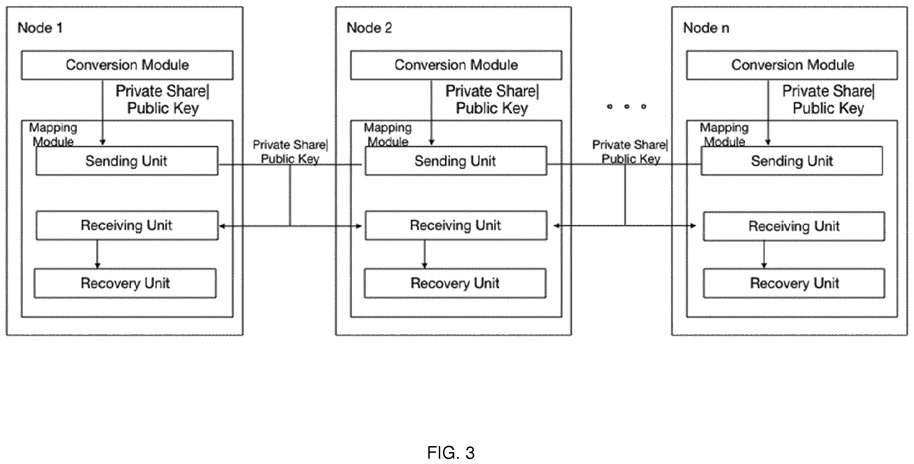

FIG.3 is a block diagram of the system. Each node Each node runs the system indiscriminately. As shown in Fig.3, there are four modules in the system: 1)the key generation module, used to generate public-private key pairs (ptki, puki), ptki is the private key, and puki is the public key without the participation of a trusted center; 2)the conversion module, used to process public-private key pairs according to the secret sharing protocol, and complete (n, n) threshold to (t, n) threshold conversion; 3) the mapping module, used to generate a (t, t) threshold private key according to the threshold logic, and completes mapping of ptki to ptki'; 4)the signature module, used to implement the communication and calculation according to the signature logic, and store the relevant result, and finally complete the final signature.

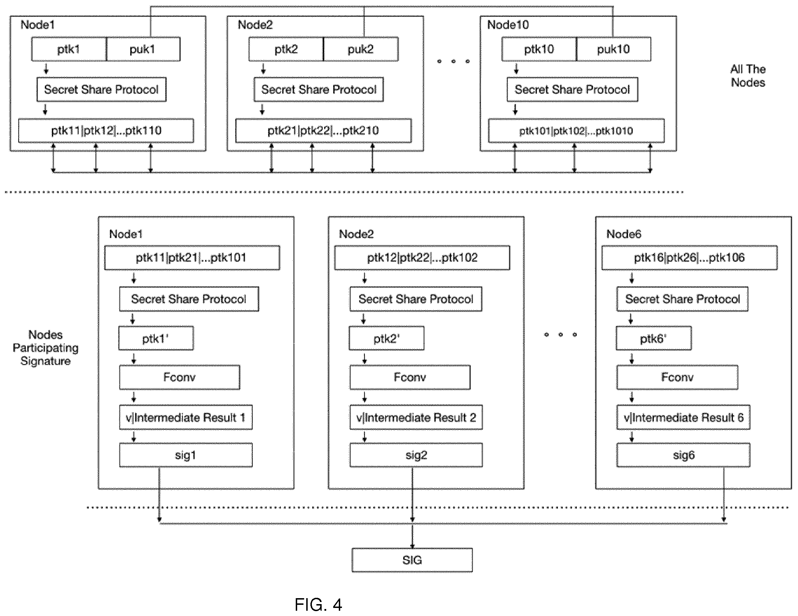

FIG.4 shows the structure of the mapping module. As shown in Fig.4, there are four units in the module:1) the receiving unit, used to receive the public keys and the private key shares sent by all other nodes; 2)the sending unit, used to broadcast the public key to other nodes and send the private key shares to the corresponding nodes according to the secret sharing protocol;3) the recovery unit, used to generate the final public key according to the elliptic curve operation and generate the new private key according to the recovery method in the secret sharing protocol.

The foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications; they thereby enable others skilled in the art to best utilize the invention and various embodiments with various modifications as are suited to the particular use contemplated. Notably, not every benefit described herein need be realized by each embodiment of the invention; rather any specific embodiment can provide one or more of the advantages discussed above. It is intended that the following claims and their equivalents define the scope of the invention.

## Claims

1. A threshold distributed elliptic curve key generation and signature method, comprising the following steps:

   S1, in the absence of a trusted center to participate, all n nodes generate their own key pair, ptki, puki, wherein ptki is a private key, and puki is a public key.
   S2, each node processes its own public-private key pair according to a secret sharing protocol, and completes the conversion of a (n, n) threshold to a (t, n) threshold.
   S3, after determining t signature nodes, each node generates a (t, t) threshold private key according to a threshold logic, and completes a mapping of ptki to ptki', wherein ptki' is the threshold private key, by means of a process comprising:

      S31, all n nodes, according to the rules of the elliptic curve, each generate their own key pair, ptki, puki, wherein ptki is the private key, puki is the public key, and i is the node number;
      S32, all n nodes broadcast their own public keys puki to other nodes, and after receiving the pukx broadcasted by other n-1 nodes, combine n pukx into a complete public key PUK according to the elliptic curve operation.
      S33, all n nodes do the (t,n) threshold processing according to a selected secret sharing protocol, map ptki to n segments ptkij, and send ptkij to the corresponding node numbered j; and
      S34, when a signature is performed, t available nodes recover ptki' using the received n ptkij according to the recovery method of the selected secret sharing protocol;

and

S4, according to signature logic, each node uses ptki' to complete a communication and calculation in the signature protocol, and stores the relevant calculation results, and finally completes the overall signature.

2. An efficient threshold distributed elliptic curve key generation and signature method according to claim 1, which is **characterized in that** the secret sharing protocol is Shamir or Asmuth-Bloom protocol.

3. An efficient threshold distributed elliptic curve key generation and signature method according to claim 1, which is **characterized in that** the step S4 comprises the following steps:

S41, according to a distributed signature algorithm, all nodes adopt a unified homomorphic encryption algorithm HE, which each node uses to generate a public-private key pair, HEptki, HEpuki, wherein HEptiki is a private key, HEpuki is a public key, and i is a node number.

S42, all nodes use the unified secret transform function Fconv to convert the information that cannot be directly disclosed in the calculation process to publicly available information according to the calculation process of the elliptic curve signature algorithm.

S43, each node sends the result of S42 to the corresponding node, and receives information of other nodes;

S44, according to the flow of the elliptic curve signature algorithm, each node records the information in S43 that is not related to the signed object but is used in the final signature generation, and each node maintains a unified view number v;

S45, according to the requirements of an online business, S42-44 is repeatedly executed to complete the offline calculation process required for distributed signature;

S46, when the signature service is provided online, each node synchronizes the view information v, and the calculation result stored in the view is taken out; and each node starts another thread to execute S45 continuously to produce intermediate results needed in a final signature.

S47, each node completes the calculation related to the signed object, and then completes the final signature calculation according to the intermediate result extracted in S46, generating a signature result sigi, wherein i is the node number; and

S48, each node transmits the sigi in S47 to the selected assembly node; and, after receiving the information transmitted by each node, the assembly node generates the final signature result SIG.

4. A threshold distributed elliptic curve key generation and signature system, comprising the following modules:

a key generation module, configured and used to generate public-private key pairs, ptki, puki, wherein ptki is the private key, and puki is the public key without the participation of a trusted center;

a conversion module, configured and used to process public-private key pairs according to the secret sharing protocol, and complete (n, n) threshold to (t, n) threshold conversion;

a mapping module, configured and used to generate a (t, t) threshold private key according to the threshold logic, and completes mapping of ptki to ptki', wherein ptki' is the threshold private key, the mapping module being configured to perform the following steps:

S31, all n nodes, according to the rules of the elliptic curve, each generate their own key pair, ptki, puki, wherein ptki is the private key, puki is the public key, and i is the node number;

S32, all n nodes broadcast their own public keys puki to other nodes, and after receiving the pukx broadcasted by other n-1 nodes, combine n pukx into a complete public key PUK according to the elliptic curve operation.

S33, all n nodes do the (t,n) threshold processing according to a selected secret sharing protocol, map ptki to n segments ptkij, and send ptkij to the corresponding node numbered j;

S34, when a signature is performed, t available nodes recover ptki' using the received n ptkij according to the recovery method of the selected secret sharing protocol;

and

a signature module, configured and used to implement the communication and calculation according to the signature logic, and store the relevant result, and finally complete the final signature.

**Patentansprüche**

1. Verfahren zur Erzeugung und Signatur von Schlüsseln mit verteilten elliptischen Kurven mit Schwellenwerten, das die folgenden Schritte aufweist:

S1, in Ermangelung eines vertrauenswürdigen Zentrums, das sich beteiligt, erzeugen alle n Knoten ihr eigenes Schlüsselpaar, ptki, puki, wobei ptki ein privater Schlüssel und puki ein öffentlicher Schlüssel ist;

S2, jeder Knoten verarbeitet sein eigenes öffentliches-privates Schlüsselpaar gemäß einem Protokoll zur gemeinsamen Nutzung von Geheimnissen und führt die Umwandlung eines (n, n)-Schwellenwertes in einen (t, n)-Schwellenwert durch;

S3, nach der Bestimmung von t Signaturknoten erzeugt jeder Knoten einen (t, t) Schwellenwert-Privatschlüssel gemäß einer Schwellenwertlogik und vervollständigt eine Abbildung von ptki auf ptki', wobei ptki' der Schwellenwert-Privatschlüssel ist, mittels eines Prozesses, der aufweist:

S31, alle n Knoten erzeugen gemäß den Regeln der elliptischen Kurve jeweils ihr eigenes Schlüsselpaar ptki, puki, wobei ptki der private Schlüssel, puki der öffentliche Schlüssel und i die Knotennummer ist;

S32, alle n Knoten senden ihre eigenen öffentlichen Schlüssel puki an andere Knoten, und nachdem sie die von anderen n-1 Knoten gesendeten pukx empfangen haben, kombinieren sie n pukx zu einem vollständigen öffentlichen Schlüssel PUK gemäß der elliptischen Kurvenoperation;

S33, alle n Knoten führen die (t,n)-Schwellenwertverarbeitung gemäß einem ausgewählten Protokoll zur gemeinsamen Nutzung von Geheimnissen durch, bilden ptki auf n Segmente ptkij ab und senden ptkij an den entsprechenden Knoten mit der Nummer j; und

S34, wenn eine Signatur durchgeführt wird, stellen t verfügbare Knoten ptki' unter Verwendung der empfangenen n ptkij gemäß der Wiederherstellungsmethode des ausgewählten Protokolls zur gemeinsamen Nutzung von Geheimnissen wieder her;

und

S4, gemäß der Signaturlogik verwendet jeder Knoten ptki', um eine Kommunikation und Berechnung im Signaturprotokoll abzuschließen, speichert die entsprechenden Berechnungsergebnisse und vervollständigt schließlich die Gesamtsignatur.

2. Effizientes Verfahren zur Erzeugung und Signatur von Schlüsseln mit verteilten elliptischen Kurven mit Schwellenwerten nach Anspruch 1, **dadurch ge-**

**kennzeichnet, dass** das Protokoll zur gemeinsamen Nutzung von Geheimnissen das Shamir- oder Asmuth-Bloom-Protokoll ist.

3. Effizientes Verfahren zur Erzeugung und Signatur von Schlüsseln mit verteilten elliptischen Kurven mit Schwellenwerten nach Anspruch 1, **dadurch gekennzeichnet, dass** der Schritt S4 die folgenden Schritte aufweist:

S41, gemäß einem verteilten Signaturalgorithmus verwenden alle Knoten einen einheitlichen homomorphen Verschlüsselungsalgorithmus HE, den jeder Knoten verwendet, um ein öffentliches-privates Schlüsselpaar HEptki, HEpuki zu erzeugen, wobei HEptiki ein privater Schlüssel, HEpuki ein öffentlicher Schlüssel und i eine Knotennummer ist;

S42, alle Knoten verwenden die einheitliche geheime Transformationsfunktion Fconv, um die Informationen, die im Berechnungsprozess nicht direkt offengelegt werden können, in öffentlich zugängliche Informationen gemäß dem Berechnungsprozess des Signaturalgorithmus mit elliptischen Kurven umzuwandeln;

S43, jeder Knoten sendet das Ergebnis von S42 an den entsprechenden Knoten und empfängt Informationen von anderen Knoten;

S44, gemäß dem Ablauf des Signaturalgorithmus mit elliptischen Kurven zeichnet jeder Knoten die Informationen in S43 auf, die sich nicht auf das signierte Objekt beziehen, aber bei der endgültigen Signaturerstellung verwendet werden, und jeder Knoten behält eine einheitliche Ansichtsnummer v bei;

S45, gemäß den Anforderungen eines Online-Geschäfts, wird S42-44 wiederholt ausgeführt, um den für die verteilte Signatur erforderlichen Offline-Berechnungsprozess abzuschließen;

S46, wenn der Signaturdienst online bereitgestellt wird, synchronisiert jeder Knoten die Ansichtsinformationen v, und das in der Ansicht gespeicherte Berechnungsergebnis wird herausgenommen; und jeder Knoten startet einen anderen Thread, um S45 kontinuierlich auszuführen, um Zwischenergebnisse zu erzeugen, die für eine endgültige Signatur benötigt werden;

S47, jeder Knoten vervollständigt die auf das signierte Objekt bezogene Berechnung und vervollständigt dann die endgültige Signaturberechnung gemäß dem in S46 extrahierten Zwischenergebnis, wobei ein Signaturergebnis sigi erzeugt wird, wobei i die Knotennummer ist; und

S48, jeder Knoten überträgt die sigi in S47 an den ausgewählten Zusammenstellungsknoten; und nach dem Empfang der von jedem Knoten übertragenen Informationen erzeugt der Zusammenstellungsknoten das endgültige Signaturergebnis SIG.

4. System zur Erzeugung und Signatur von Schlüsseln mit verteilten elliptischen Kurven mit Schwellenwerten, das die folgenden Module aufweist:

ein Schlüsselerzeugungsmodul, das konfiguriert ist und verwendet wird, um öffentliche-private Schlüsselpaare, ptki, puki, zu erzeugen, wobei ptki der private Schlüssel und puki der öffentliche Schlüssel ist, ohne die Beteiligung eines vertrauenswürdigen Zentrums;
ein Umwandlungsmodul, das so konfiguriert ist und verwendet wird, dass es öffentliche-private Schlüsselpaare gemäß dem Protokoll zur gemeinsamen Nutzung von Geheimnissen verarbeitet und die Umwandlung von (n, n) Schwellenwerten in (t, n) Schwellenwerte abschließt;
ein Abbildungsmodul, das konfiguriert ist und verwendet wird, um einen Schwellenwert-Privatschlüssel (t, t) gemäß der Schwellenwertlogik zu erzeugen und die Abbildung von ptki auf ptki' zu vervollständigen, wobei ptki' der Schwellenwert-Privatschlüssel ist, wobei das Abbildungsmodul konfiguriert ist, um die folgenden Schritte durchzuführen:

S31, alle n Knoten erzeugen gemäß den Regeln der elliptischen Kurve jeweils ihr eigenes Schlüsselpaar ptki, puki, wobei ptki der private Schlüssel, puki der öffentliche Schlüssel und i die Knotennummer ist;
S32, alle n Knoten senden ihre eigenen öffentlichen Schlüssel puki an andere Knoten, und nachdem sie die von anderen n-1 Knoten gesendeten pukx empfangen haben, kombinieren sie n pukx zu einem vollständigen öffentlichen Schlüssel PUK gemäß der elliptischen Kurvenoperation;
S33, alle n Knoten führen die (t,n)-Schwellenwertverarbeitung gemäß einem ausgewählten Protokoll zur gemeinsamen Nutzung von Geheimnissen durch, ordnen ptki den n Segmenten ptkij zu und senden ptkij an den entsprechenden Knoten mit der Nummer j;
S34, wenn eine Signatur durchgeführt wird, stellen t verfügbare Knoten ptki' unter Verwendung der empfangenen n ptkij gemäß der Wiederherstellungsmethode des ausgewählten Protokolls zur gemeinsamen Nutzung von Geheimnissen wieder her;

und
ein Signaturmodul, das so konfiguriert ist und verwendet wird, dass es die Kommunikation und die Berechnung gemäß der Signaturlogik durchführt, das entsprechende Ergebnis speichert und schließlich die endgültige Signatur erstellt.

## Revendications

1. Procédé de génération et de signature de clés de courbe elliptique distribuées à seuil, comprenant les étapes suivantes :

S1, en l'absence d'un centre sécurisé auquel participer, tous les n nœuds génèrent leur propre paire de clés, ptki, puki, ptki étant une clé privée et puki étant une clé publique.
S2, chaque nœud traite sa propre paire de clés publique-privée selon un protocole de partage de secret et réalise la conversion d'un seuil (n, n) en un seuil (t, n).
S3, après avoir déterminé t nœuds de signature, chaque nœud génère une clé privée de seuil (t, t) selon une logique de seuil, et réalise un mappage de ptki sur ptki', ptki' étant la clé privée de seuil, au moyen d'un processus comprenant :

S31, tous les n nœuds, selon les règles de la courbe elliptique, génèrent chacun leur propre paire de clés, ptki, puki, ptki étant la clé privée, puki étant la clé publique et i étant le numéro de nœud ;
S32, tous les n nœuds diffusent leurs propres clés publiques puki à d'autres nœuds, et après avoir reçu les pukx diffusées par n-1 autres nœuds, combinent n pukx en une clé publique complète PUK selon l'opération de courbe elliptique.
S33, tous les n nœuds effectuent le traitement de seuil (t, n) selon un protocole de partage de secret sélectionné, mappent ptki sur des segments ptkij, et envoient ptkij au nœud correspondant numéroté j ; et
S34, lorsqu'une signature est effectuée, t nœuds disponibles récupèrent ptki' en utilisant les n ptkij reçues selon le procédé de récupération du protocole de partage de secret sélectionné ;

et
S4, selon une logique de signature, chaque nœud utilise ptki' pour réaliser une communication et un calcul dans le protocole de signature, et mémorise les résultats de calcul pertinents, et enfin réalise la signature globale.

2. Procédé efficace de génération et de signature de clés de courbe elliptique distribuées à seuil selon la revendication 1, **caractérisé en ce que** le protocole de partage de secret est le protocole Shamir ou Asmuth-Bloom.

**3.** Procédé efficace de génération et de signature de clés de courbe elliptique distribuées à seuil selon la revendication 1, **caractérisé en ce que** l'étape S4 comprend les étapes suivantes :

S41, selon un algorithme de signatures distribuées, tous les nœuds adoptent un algorithme de cryptage homomorphe unifié HE, que chaque nœud utilise pour générer une paire de clés publique-privée, HEptki, HEpuki, HEptiki étant une clé privée, HEpuki étant une clé publique et i étant un numéro de nœud.

S42, tous les nœuds utilisent la fonction de transformation secrète unifiée Fconv pour convertir les informations qui ne peuvent pas être directement divulguées dans le processus de calcul en informations accessibles publiquement selon le processus de calcul de l'algorithme de signatures de courbe elliptique.

S43, chaque nœud envoie le résultat de S42 au nœud correspondant et reçoit des informations d'autres nœuds ;

S44, selon le flux de l'algorithme de signatures de courbe elliptique, chaque nœud enregistre les informations dans S43 qui ne sont pas liées à l'objet signé mais qui sont utilisées dans la génération de la signature finale, et chaque nœud tient à jour un numéro de vue unifiée v ;

S45, selon les exigences d'une entreprise en ligne, S42-44 est exécutée à plusieurs reprises pour réaliser le processus de calcul hors ligne requis pour la signature distribuée ;

S46, lorsque le service de signature est fourni en ligne, chaque nœud synchronise les informations de vue v, et le résultat de calcul mémorisée dans la vue est retiré ; et chaque nœud démarre un autre fil d'exécution pour exécuter S45 en continu afin de produire des résultats intermédiaires nécessaires dans une signature finale.

S47, chaque nœud effectue le calcul lié à l'objet signé, puis réalise le calcul de signature finale en fonction du résultat intermédiaire extrait dans S46, générant un résultat de signature sigi, i étant le numéro de nœud ; et

S48, chaque nœud transmet le sigi dans S47 au nœud d'assemblage sélectionné ; et, après avoir reçu les informations transmises par chaque nœud, le nœud d'assemblage génère le résultat de signature finale SIG.

**4.** Système de génération et de signature de clés de courbe elliptique distribuées à seuil, comprenant les modules suivants :

un module de génération de clés, configuré et utilisé pour générer des paires de clés publique-privée, ptki, puki, ptki étant la clé privée et puki étant la clé publique sans la participation d'un centre sécurisé ;

un module de conversion, configuré et utilisé pour traiter les paires de clés publique-privée selon le protocole de partage de secret, et réaliser la conversion d'un seuil (n, n) en un seuil (t, n) ;

un module de mappage, configuré et utilisé pour générer une clé privée de seuil (t, t) selon la logique de seuil, et réaliser le mappage de ptki sur ptki', ptki' étant la clé privée de seuil, le module de mappage étant configuré pour effectuer les étapes suivantes :

S31, tous les n nœuds, selon les règles de la courbe elliptique, génèrent chacun leur propre paire de clés, ptki, puki, ptki étant la clé privée, puki étant la clé publique et i étant le numéro de nœud ;

S32, tous les n nœuds diffusent leurs propres clés publiques puki à d'autres nœuds, et après avoir reçu les pukx diffusées par n-1 autres nœuds, combinent n pukx en une clé publique complète PUK selon l'opération de courbe elliptique.

S33, tous les n nœuds effectuent le traitement de seuil (t, n) selon un protocole de partage de secret sélectionné, mappent ptki sur des segments ptkij, et envoient ptkij au nœud correspondant numéroté j ;

S34, lorsqu'une signature est effectuée, t nœuds disponibles récupèrent ptki' en utilisant les n ptkij reçues selon le procédé de récupération du protocole de partage de secret sélectionné ;

et

un module de signature, configuré et utilisé pour réaliser la communication et le calcul selon la logique de signature, et mémoriser le résultat pertinent, et enfin réaliser la signature finale.

FIG. 1

FIG. 2

FIG. 3

FIG. 4

EP 3 675 413 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEVEN GOLDFEDER et al.** *Securing bitcoin wallets via a new DSA/ECDSA threshold signature scheme,* 08 March 2015